# EUROPEAN PATENT SPECIFICATION

(11) **EP 4 094 911 B1**
(45) Date of publication and mention of the grant of the patent: **16.10.2024**
(21) Application number: 22175525.9
(22) Date of filing: 25.05.2022
(51) Int. Cl.: B27K 5/00, B05D 7/06, B27K 5/02, B27M 1/06

(54) **METHOD FOR THE TREATMENT OF A WOODEN MATERIAL**
VERFAHREN ZUR BEHANDLUNG EINES HOLZWERKSTOFFES
PROCEDE DE TRAITEMENT D'UN MATERIAU EN BOIS

(30) Priority: 25.05.2021 IT 202100013472
(43) Date of publication of application: 30.11.2022
(73) Proprietor: Sapiens S.r.l., 22070 Fenegrò Como (IT)
(72) Inventor: MELES, Andrea, 22070 Fenegrò - Como (IT)
(74) Representative: Feltrinelli, Secondo Andrea

(56) References cited:
- US-A- 6 051 096

## Description

### TECHNICAL FIELD OF THE INVENTION

The present invention refers to a method for treating a wooden material. In particular, the present invention refers to a method for the treatment of a wooden material which determines a structural consolidation of the external surface capable of compacting and avoiding crumbling and pulverization, an improved durability, water resistance, stability, etc. and a particular aesthetic appearance, with the introduction, for example, of particular colours.

### STATE OF THE PRIOR ART

A Japanese technique is known (known for many centuries as "Shou Sugi Ban" or "Yakisugi") which allows to treat a wood by burning and/or carbonization, in order to obtain a material with improved chemical-physical properties and with a particular aesthetics, that is to say of a black or in any case dark colour.

The wood treated in this way is more resistant to fire and water, and also less subject to attack by fungi and/or parasites, with a significant increase in its durability over the years in the external environment. Furthermore, it is an ecological method, in the sense that it limits the use of synthetic materials for the treatment of wood.

However, this technique, which while it allows to treat the wood fiber making it more durable, fails to avoid the creation of dust and flakes of material, when the wood is touched, used or cleaned, (or subjected to atmospheric phenomena such as rain), as well as the release of elements of burning and carbonized powders that dirty the surrounding areas once applied in vertical surfaces or external facades.

The patent document CN107813393 describes a method for the production of a wooden floor, in which the wood is stacked in a pile and then placed under a press of a concrete block with a weight of 1 ton/m², dried and then heat-treated at a temperature of about 185-210°C, in the presence of steam, without the wood itself being subjected to direct contact with a flame. After the heat treatment, the wood is quickly cooled with spray water until it reaches a temperature of about 120-125°C; the cooling then continues up to a temperature of about 40-60°C, with simultaneous reduction of humidity.

After this, the wood is subjected to a treatment of mechanical processing, shearing and coating with a UV base coating with additives of silicon or aluminium oxide particles with a hardening function.

Document KR20120031280 describes a method for making a piece of furniture using a wood having a carbonized layer comprising the steps of thermally treating the wood in a charcoal oven (at a temperature of about 800-1200°C for 3-12 hours), cool it slowly, remove the charred residual layer and clean the surface of the wood. The residual carbonized layer is superficially treated with a polishing (by grinding the carbonized residues), in order to obtain a smooth surface. The surface is also coated with a natural wax or natural oil.

Document CN108748571 describes a method for making a wooden bathroom cabinet in which the wood is pre-treated through a high temperature acetylene spray gun, equipped with a flame at 1500°C. It is possible to remove the carbonized surface part of the wood by grinding and polishing with a grinding wheel of sandpaper. The wood is then coated with a coating mixture. During the coating step, the wood is pre-heated and the moisture evaporates. The coating mixture may comprise vegetable waxes and oils, as well as further additives and is applied with a brush. US6051096 discloses a method for treating wood including carbonisation, cooling, sanding of the surface and impregnation with an acrylic resin.

There is therefore a need for a method that allows these drawbacks to be overcome, producing a much more resistant and compact material, which can be used as cladding for walls or walls, panels, slabs, doors or false ceilings, both indoors and outdoors, capable of not being damaged when subjected to wear and/or cleaning and in general in contact with hands or atmospheric agents.

### AIMS OF THE INVENTION

The present invention has the technical task of improving the state of the art and overcoming the drawbacks mentioned above.

Within the scope of this technical task, an object of the present invention is to provide a method which allows to obtain a wooden material with improved mechanical properties.

A further object of the present invention is to provide a method that allows to obtain a wooden material with a peculiar aesthetic appearance and/or variously finished with different effects that are not only chromatic but also material, evolving and overcoming the aesthetic-chromatic limits set by "Yakisugi" or "Shou Sugi Ban" technique.

A still further object of the present invention is to provide a method that allows to obtain a wooden material that does not crumble and/or is not damaged as a result of wear and/or cleaning and/or if subjected to atmospheric agents and which does not have release of dirty substances deriving from burning or carbonization of the wood itself, increasing its compactness in order to be used without problems as cladding of walls or walls themselves, panels, slabs, if desired not walkable, doors or false ceilings, even in both civil and private internal areas.

According to an aspect of the present invention, a method according to claim 1 is provided.

The dependent claims refer to preferred and advantageous forms of the invention.

### BRIEF DESCRIPTION OF THE DRAWINGS

Further characteristics and advantages of the present invention will become more evident from the detailed, non-exclusive description of a preferred embodiment example of a wooden material according to the present invention, given by way of non-limiting example, in the accompanying drawings in which:
- figure 1 is an exemplary image of the wooden material obtained according to the state of the prior art,
Figure 2 is an exemplary image of the wooden material obtained according to the present invention.

### EMBODIMENTS THE INVENTION

The present invention relates to a method for treating a wooden material.

This method is based, initially, on an ancient Japanese centenary technique that allows to treat a wood by burning and/or carbonization, in order to obtain a material with improved chemical-physical properties and having a particular aesthetic. However, this method was implemented and improved after the fire treatment step, differentiating itself from the classic step, in order to obtain advantageous and innovative results, also in the world of design, as better described below.

The wooden material can include wood, for example in the form of boards, panels, laminated panels, planks, bars, beams, even possibly in different formats from the classic planks, etc., such as for example larch or Larix decidua or another wood belonging to the family of Pinaceae, cedar and/or western red cedar or Thuja plicata or another wood belonging to the Cupressaceae family, cedar of Lebanon or Cedrus Libani or oak or Quercus petraea or Quercus robur or another wood belonging to the Fagaceae family, or molecularly modified Radiata Pine wood (or marketed under the trade name "Accoya") or Hdf (or High density Fiberboard) made on molecularly modified wood fiber (or marketed under the trade name "Tricoya") or Pinus radiata, pine or spruce or any other wood suitable for the purpose.

The measure of the wooden material can have a width between 75 mm and 400mm, such as 75mm, 120mm, 140mm, 145mm, 170mm, 190mm, 210mm, 245mm, 300mm, 400 mm and/or up to larger sizes, and/or a length up to 4000 mm, such as 2000 mm, 2400 mm, 2800 mm, 3200 mm, 3400 mm, 3600 mm or 4000 mm.

Furthermore or alternatively, the wooden material can have a width between 800 mm and 1400 mm, such as for example 800 mm, 1000 mm, 1200 mm or 1400 mm.

Furthermore or alternatively, the wooden material can have an (overall) thickness between 10 mm and 100 mm, or between 10 mm and 40 mm, such as for example 40 mm, 50 mm, 60 mm, 80 mm, 100 mm, and/or any length or width or thickness according to the realization needs and/or requests. From the basic formats the final format is then divided into staves and/or panels of different shapes and geometries according to the collection and/or the construction or production needs.

The wooden material comprises at least one external surface to be treated or, in one version of the invention, the whole external surface of the wooden material is a surface to be treated. With external surface we mean the surface of the wooden material that can be visible and/or that can be touched by a user and/or that, during use, remains visible. The material according to the present invention, in fact, is used as a wall covering or as walls themselves, false ceilings, panels, sheets, if desired not walkable or positioned "vertically", doors, for example for the design industry.

By "vertical" we mean a direction that - considering a classic type structure - goes from the floor to the ceiling.

When the wooden material is used for example as a covering or false ceiling, it can also have at least one internal surface, not visible during use, if desired opposite the external visible surface.

The material according to the present invention is not a material for floors, or which can be used as flooring, or for horizontal and walkable installations, because the surface treated with fire and exposed to view is resistant, thanks to the present production method, at level contact, for example with a hand or a rag (for cleaning for example), its resistance to fire, resistance to rot, etc. is improved, but it is not able to withstand stresses similar to those caused in case of mechanical pressure deriving from foot traffic, which can be used as a floor.

The method according to the present invention, therefore, has a first step which involves providing and thermally treating a wooden material. This heat treatment (and/or carbonization and/or burning step) comprises a step of subjecting the wooden material directly to a fire and/or flame. This treatment involves direct contact between wood and fire and/or flame, placing the wooden material in contact with the flame, for a certain time duration, obtaining a treated surface.

Before the heat treatment step, the wooden material is subjected to a drying step, natural or artificial, and/or for example bringing the wood to a variable humidity between 3% and 20% or 3.5-5% or 11-14% or 12-16%.

The percentage of humidity depends on the type of wood: for example, for resinous woods (larch, spruce, pine, etc.) the humidity values are 11-14% while for woods of the Accoya or Tricoya type, the values are 3, 5-5%.

These are "inlet" humidity values, that is, of the wooden material that "enters" the heat treatment step. Immediately after the drying step, in fact, the treatment with fire and/or flame takes place for the wooden material, i.e. burning and/or carbonization over high heat and/or open flame by contact, as better specified below, in an oven with a temperature between 400°C and 500°C or above about 400°C or above about 500°C or above about 600°C or between 400°C and 800°C or between 600°C and about 800°C.

However, the treatment temperature must take into account both the botanical species and the inlet humidity (as specified above) of the wood that is subjected to contact with fire and/or flame.

For example, the burn treatment is performed on resinous woods (for example larch, spruce, pine) at a temperature in general between 620°C and 780°C (as mentioned with woods brought to a humidity of 11- 14%).

More in detail, the burn treatment is carried out with a temperature of 720-780°C for the larch, of 620-780°C for the pine, Pinus radiata, or spruce.

For Accoya and Tricoya, for example, the wood is treated by burning at a temperature between 600- 650°C (as mentioned with an inlet humidity of 3.5-5%).

This step can be carried out in an oven or by means of a torch that produces the flame, by placing the wooden material in an oven in which there is a fire and/or a flame with which the wooden material comes into contact, or by applying on at least an external surface to be treated with the flame of a torch.

The determined time duration of the heat treatment step (and/or carbonization and/or burning) can vary according to the specific weight of the wood, its type, density and/or degree of drying but is in any case less than 30 minutes and/or or between 6 minutes and 20 minutes, depending on the desired result. In particular, if this step respects the indicated times, the treated wooden surface will be only a few millimetres deep, while this measure will increase as the time of this step increases. For external supplies, where maximum stability and resistance in terms of durability are required, the process is also repeated (at least) on the rear and/or internal and/or non-visible face of the wood to ensure a completely protected element.

According to a version of the invention, the heat treatment consists in carrying out a total burn, for example at high intensity (for example by extending the intensity of the flame and/or by bringing the contact point of the flame closer to the surface) of the wooden material and/or of the external surface to be treated, in which the fire and/or flame burns the external parts of the wooden material.

During this heat treatment step, at least a part of the wooden material is burnt, with the consequent creation of a consequent burnt and/or carbonized treated surface.

Following contact with the flame and/or exposure to the flame, in fact, the fire attacks, for example for a few minutes (considering the time range indicated above, compared to other known techniques), the wooden material at least at the surface external surface to be treated, which results at least in part burnt and/or carbonized, even if it may be convenient to treat the entire external surface of the wood, for example the four major faces of the board, panel, axis, bar or beam.

The thermally treated surface is deeply engraved by fire and/or flame and its fibers are at least partially modified (for example burned and/or charred).

In this way, the wooden material and/or the treated surface is stable and/or resistant to fire and/or impermeable and/or resistant to water or humidity and/or resistant to biological attack, for example by fungi, insects or bacteria. The wood is burned in its outer layer represented by a minimum of 2 mm up to a maximum of 4 mm. This treated, burnt and/or carbonized surface, which corresponds to the outer layer of the wood, therefore has a thickness varying between 2 and 4 mm.

After the heat treatment and/or carbonization and/or burning step, once the correct degree of burning according to the wood and/or its applications has been determined, water, in particular cool water, is applied to the wooden material and/or the treated surface. In this way, the treated surface cools and/or any flames present on the material are extinguished. In this way a workable surface is obtained.

In particular, we work with water at a temperature between 5°C and 15°C. This water, applied to the still burning wood, causes a thermal shock that imprisons and solidifies the structure of the burned boards/planks and/or burned panels.

As you will be able to evaluate from the following discussion, all the steps following the heat treatment and/or the application of water take place at a temperature lower than about 32°C or equal to or lower than 30°C or lower than about 25°C or less than or equal to 22°C. The advantage of maintaining this temperature is inherent in the fact that, following the thermal shock and/or low temperature, the pores remain closed and therefore the material is more compact and endowed with the indicated characteristics.

Therefore, (at least) the outer surface of the resulting material has closed pores and/or is compact.

A first manual cleaning is carried out in sequence, for example with wet rags, for example with minimal pressure, to remove the pulverization caused by excess burning. This is followed by a brushing carried out with brushes with bristles, for example metal or nylon, for example at 5 mtl/minute, carried out for example delicately, parallel to the wood fiber. A brushed surface is then obtained.

The brushing steps can be repeated as needed.

Then follow some steps of post-burn treatment and post application of the water, as indicated below.

After the drying, burning, extinguishing with water and brushing steps, the final acclimatization step of the wood takes place. This step takes place by bringing the wood - which has already been cooled by water - into an area or chamber (for example closed) with controlled humidity and temperature. This step can also be called acclimatization.

The acclimatization step takes place, for example, at a temperature of 22°C at a humidity of between 45-55%, for a time of 72 hours, for example subsequently by progressively lowering the temperature and humidity with the increase in the residence time of the wood.

For example, according to at least one version of the invention, the acclimatization step of the wood occurs according to two sub-steps: the first sub-step occurs for 72 hours at 22°C with a humidity of between 45-50% while the second sub-step occurs at a temperature equal to 18°C, humidity at 35% for 96 hours. An acclimatized workable surface is thus obtained.

After the acclimatization step, a (first) brushing step of the at least one acclimatized workable surface follows, for example brushing manually, for example in a linear direction. This brushing step can be performed once, twice or more.

This step can take place with a rotary brush, for example with nylon bristles at a feed rate of 5 mtl/minute (mtl = linear meters) in order to remove any fragile external layers of the consolidated workable surfaces and not perfectly adhered to the wooden material itself. Such layers are given for example by an excess carbonization. A further brushed surface is thus obtained, which is also carbonized and/or burned.

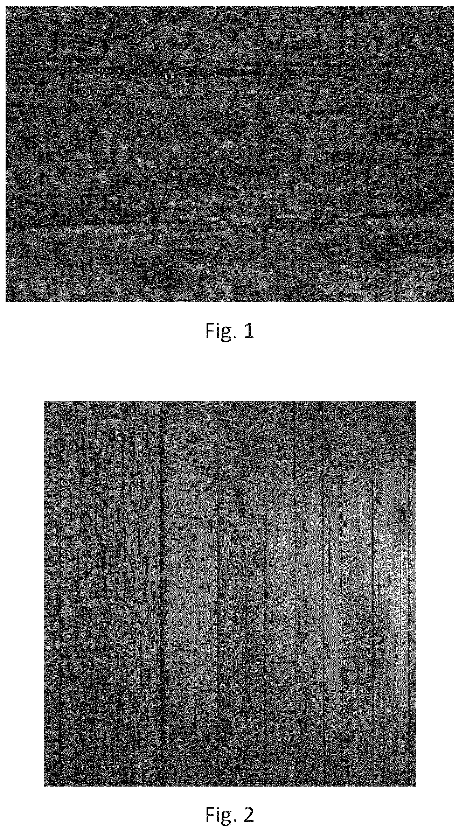

Compared to the ancient and known technique, for example visible in Figure 1, according to which an oil is applied to the burned surface, the present method does not apply any oil in this step, because the method according to the present invention is based on the fact of restoring a thermal equilibrium of the material thanks to the aforementioned acclimatization step.

In order to further improve the characteristics of the further brushed surface, the method according to the present invention provides a step of superficially treating the further brushed surface. This superficial treatment step allows to obtain the non-crumbling, non-dirty, cleanable and compact external surface, also allowing to apply a colour. The surfaces of the known art absolutely do not allow colouring subsequent to carbonization and/or brushing, nor do they have the advantages indicated above for the present invention. This surface treatment step may include an initial preparatory step of application of a consolidating treatment and/or a step of applying at least one water consolidating impregnating agent, followed by one or more resins according to the selected colour type and finishing.

In particular, the step of treating the surface comprises a consolidating step of the at least one brushed surface maintaining at least the brushed surface at a temperature of 20°C, at a humidity of between 45% and 50%, in which the consolidating step comprises applying at least a water-based impregnating agent (consolidating agent), in which at least one water-based impregnating agent is based on or includes possibly modified acrylic resins, followed by a drying step (the water-based impregnating agent) which takes place at 20°C a humidity between 45% and 50% for 4 hours, in which the consolidating step, comprising the step of applying at least one impregnating agent to the water and the drying step, can be repeated one, two or more times, obtaining at least one surface consolidated workable.

According to at least one version of the present invention, the resin is naturally based or comprises most of the ingredients with a water cycle, for example without solvents.

Indeed, in at least one version of the invention, the total cycle is based on water, i.e. without solvents.

At least one of the preparatory step of applying a water-based consolidating impregnating agent and the step of applying at least one resin, preferably both, occur by application by means of at least one nozzle and/or by spray and/or by means of the "flow coating" technique.

In particular, the cycle begins with the preparatory step of applying a water-based consolidating impregnating agent, after having prepared the material and/or the brushed and dried surface correctly (as indicated above) to allow the correct application of the water-based consolidating impregnating agent. This initial treatment can be applied by flow coating with a quantity of impregnating agent equal to 180 micron/m², for example in two (double) steps. The wooden material and/or the work area is kept at 20°C in the initial impregnating step in flow coating.

The technique called "flow coating" is a technique for applying a substance in which the wooden material is in a vertical position (for example hung by means of an air transport system) and is hit by drops or micro-drops of impregnating agent (in this case, or of resin in the next step), which is delivered by means of nozzles, for example positioned vertically, completely covering the surface of interest. The nozzles are positioned at the surface of interest or to be treated. For example, according to at least one version of the present invention, the surface of interest or to be treated comprises the front face and the two sides of the wooden material in question (for example of the relative boards of wooden material). In a further version, the surface of interest or to be treated also includes the rear face, even if for example applied in contact with a wall, because in some outdoor contexts - treating the entire surface of the material, including the rear face - there is greater protection against humidity.

The impregnating treatment cannot be considered a primer but rather a consolidating impregnating agent, for example applied in two coats with appropriate drying rest periods between one coat and the other.

Once the preparatory step has been completed (in flow coating if desired), the wooden material and/or the surface on which the first treatment is applied undergoes a first drying step. When the material undergoes two preparatory steps, with the application of two coats of impregnant, there are two steps of drying the impregnant itself, one after each coat.

The drying steps take place in two times of four hours each at a temperature of 20°C with relative humidity of 45/50%. After the (second) drying step of 4 hours, the material is left to rest for another 24 hours at 30°C with humidity 45/50%.

In particular, in at least one version of the invention, this drying step consists of at least two or three drying sub-steps: a first consolidating treatment with a first drying of the impregnating agent at 20°C for 4 hours and relative humidity at 45/50%, followed by a second coat of consolidating treatment in turn followed by a further four hours of drying at 20°C, followed by final drying for 24 hours at 30°C always at 45/50% humidity.

A dried consolidated workable surface is thus obtained, which is correctly treated.

Then follows a further (or second) final step of brushing, for example under the same conditions indicated above, in order to compact and eliminate any irregularities present on the wooden material and/or on the dried surface.

This step of superficially treating the at least one brushed surface then comprises a (first) consolidating step with application of a water-based thix impregnating agent, with acrylic resins, possibly modified, at a temperature of 20°C, followed by a drying step.

The thix impregnating agent is of the thixotropic type.

In particular, the application of a water-based thix impregnating agent with modified acrylic resins, if desired, can be carried out in two coats. The first coat of impregnating agent is made with 180 or 220 micron/m² in flow coating at 20°C. A drying step of 80 minutes (humidity 45/50%) at 20°C is then provided. After the first drying, the material can be brushed with a nylon brush as in the previous steps.

Subsequently, the material is finished with a second application of water-based thix impregnating agent with acrylic resins, if desired, modified with the 180 micron/m² weight in flow coating at 25°C, followed by the final drying step at 30°C for 6 hours with humidity of 45/50%. Also in this case, a brushing step can follow.

Once the previous step has been carried out, the surface finishing application step is prepared, obtained by applying at least one acrylic resin, possibly modified, to colourless water (version for the black model or in which the black colour resulting from burning and/or carbonization is seen , such as in the version known commercially with the name Ardes dry black 330), if desired hybrid, applied at 20°C with humidity of 45/50% or 50%, for example in flow coating, and subsequent solidification in drying for 24 hours under the same conditions of the treatment.

In particular, at least one of the step of applying at least one impregnating agent to the water, the at least one or two steps of applying such impregnating agent thix and the step of applying at least one water-based acrylic resin takes place by application through at least one nozzle and/or by spray and/or by the "flow coating" technique.

In detail, the final treatment step takes place on the surfaces properly consolidated and prepared from the previous steps by applying a water-based acrylic resin, which is for example a modified hybrid water-based acrylic resin. This resin can be a hybrid resin, meaning by "hybrid" a painting resin that is suitable for being applied according to different methodologies.

The step of applying a water-based acrylic resin possibly modified, if desired, hybrid takes place, as mentioned, by applying it through at least one nozzle and/or by spray and/or through the "flow coating" technique described above.

With this step, in at least one version of the invention, a black coloured product is obtained.

As said, the method according to the present invention allows to consolidate at least one face or surface of the treated wooden material without crumbling and dirtiness.

The chemical-physical characteristics (of the water-based hybrid modified acrylic resin) are:
Dry residue on the IO 371 method in%: value range 26 +/- 1
Viscosity DIN 2 @ 20 ° on method IO 301 in seconds: value 50 +/- 3
Specific weight IO 330 g/cm³: value 1.020 +/- 0.010

The step of applying a water-based acrylic resin possibly modified, if desired hybrid, takes place at a constant temperature of 20°C. To achieve this, the painting chamber, inside which this step takes place, is constantly conditioned at 20°C.

The water-based acrylic resin therefore provides, as seen, the preparation of the at least one surface of the wooden material with a suitable transparent impregnating agent, as specified above, which is duly dried, before the step of applying a painting resin.

The final step of surface finishing can comprise, if necessary, at least a second or subsequent step of applying at least one colour and/or at least one pigment, if desired conveyed by at least one resin, for example pigmented. This step is necessary for all colours other than black. In this case, at least one desired colour and/or pigment (other than black) is applied which is added to the water-based acrylic resin, possibly modified if desired hybrid, indicated above. Then another application takes place, compared to the previous one, in which the resin and the colour are applied in successive and/or single steps (for example because they are mixed together).

In particular, this step of applying at least one coloured pigment optionally takes place by applying said at least one coloured pigment and/or at least one water-based acrylic resin comprising said at least one coloured pigment, in which said at least one coloured pigment comprises at least one between: a titanium colouring pigment for the white colour, a gold powder colouring pigment based on metal powder for the gold or golden colour, a natural iron metal powder colouring pigment for the platinum colour, at least one blue organic colouring pigment green-red-avio respectively for the blue-green-red-avio colour variants, at least one ferrous metal pigment in oxidative reaction for the Corten colour with acid reagents with contact duration for 24 hours in first coat at 20°C, for example with an application of 55 microns/m² and a second coat at 20°C with an application of 45 microns/m² and a corrosion inhibitor, at least one ferrous metal pigment on a varnish base for bronze, lead, copper colours, brass respectively for the metallescent and/or magnetic colours.

In detail, after the first and/or second or further step of applying a water-based acrylic resin and/or after said application step of at least one coloured pigment, a further final drying step takes place: the wooden material is then left to dry at a temperature of 30°C and humidity of 45-50% for 96 hours. If desired, this possible repeated drying step is preceded by a final application step of said at least one water-based acrylic resin, by application by means of at least one nozzle and/or by spray and/or by means of the "flow coating" technique. This final application can be considered a final consolidating finishing step.

At the end of this final drying step, the various resin layers that may be applied are considered solidified.

The final finishing step takes place on the fire-treated (and brushed) surface on which the impregnating agent is applied and, after its drying and after a further brushing step, it is subsequently applied, possibly on different passages and coatings depending on the aspects to be obtained, at least one resin if desired hybrid, water-based varnish of a water-based acrylic hybrid nature.

In essence, therefore, the usable resins may include paints on a specially consolidated base and subsequent treatment with several coats, as needed, of hybrid water-based acrylic-based finishes in dispersion.

The used resin can have, as indicated, at least one colour and/or pigment, capable of giving a certain colour to the wooden material and/or to the brushed surface and/or to the painted surface. This colour can be for example white, green, blue, red, air force blue, gold, silver, metallic, corten, bronze, copper, lead, including metal elements, etc., depending on the specific needs of the application and the client. It therefore follows that the method described above comprises a step of colouring and/or applying at least one colour and/or a pigment, according to what has been previously described.

The described finishing step consists of a specific treatment of the present invention, following which the external surface of the wooden material, which corresponds to the treated, brushed and painted surface, is consolidated, coloured, able not to crumble or shatter into flakes or pulverize as a result of contact with a hand, a rag or other commonly used substances, and therefore as a result of wear and/or cleaning.

The wooden material according to the present invention is therefore more compact and solid, for example with substantially closed pores, than the usual fire treatments, which result in a material that dirties, is fragile, shatters easily and does not resist cleaning treatments.

In addition, the resulting surface remains rough and/or irregular to the touch, for example maintaining the sensation of touching a "raw" or charred wood surface rather than a "polished" wood.

According to the method of the present invention, the obtained or final external surface is not smooth.

Thanks to the present invention it is prevented that, to the touch or in use, the charred external surface of the wooden material from dirtying and releasing soot, particles and residues which, for example in external use, would tend to heavily stain the floor at the at least one wall or panel or false ceiling on which the wooden material is placed. As has been seen, such drawbacks are present in the material of the known art.

On the other hand, the difference in compactness between the present invention and the solution according to the prior art can also be appreciated by comparing the figures 1 and 2 attached hereto, with the surface of the present invention, which is also visually much more compact, regular and homogeneous, and finished.

Therefore, the wooden material according to the present invention can be used both indoors and outdoors, as cladding of walls or walls themselves, false ceilings, panels, sheets, doors, etc. In any case, these are always "vertical" or ceiling applications, i.e. not applicable as flooring or walkable surfaces. The wooden material according to the present invention, however, is not a flooring material or used for flooring.

At the same time, the wooden material according to the present invention does not cause the formation of flakes and/or dust, is resistant to water, fire, bad weather, biological attack, can be cleaned and can have the desired colour.

The treated, brushed and painted surface (which is the one visible, for example, in figure 2) is protected and practical, keeping the peculiar texture and beauty given by burning and/or carbonization preserved. The hybrid modified water-based acrylic resin applied, in fact, coloured or not, reveals the charred aspect of the external surface, which therefore gives a completely peculiar aesthetic.

Furthermore, the technique according to the present invention allows to obtain an ecological material, substantially without the use of toxic or harmful components for humans (thanks to water cycles) and for the environment, unlike what happens in prior art.

The present disclosure also refers to a material which can be obtained with the method indicated above, such material not being object of the present invention.

The wooden material according to the present disclosure, therefore, has an external surface which comprises a charred and/or burned layer and at least a coating of at least water-based acrylic resin possibly modified, if desired, hybrid in which the coating of at least one painting resin covers, for example completely, the charred and/or burned layer.

The charred and/or burned layer comprises wood material that is burned and/or charred and/or subjected to the heat treatment described above. The at least one water-based acrylic resin coating optionally modified if desired hybrid comprises a painting resin of the type described above.

The layer of burnt and/or carbonized wood material, being subjected to at least one brushing and/or consolidation and/or preparation step with at least one impregnating agent, is free of particles and/or parts not fully adhered to the wood material itself. Therefore, this layer comprises only burnt and/or carbonized wooden material which is completely adhered to the remaining wooden material. By fully adhered it means that, if this layer is touched, wiped with a cloth or a cleaning tool, etc., it does not detach from the remaining non-carbonized wooden material.

The material is isotropic, but a central natural layer preserved from the fire can be divided with respect to the external one treated by the fire itself (for example burnt bark of a few millimetres), to which is then applied the treatment and/or coating of the at least one water-based acrylic resin possibly modified if desired hybrid and/or to which the colour is applied.

In this way, the wooden material has all the advantages indicated above, which make it suitable for applications both for the interior of buildings and outside, and which make it an extremely versatile and ecological material ideal for design applications today very much sought after by designers in the world of architecture.

In the present discussion, when we talk about humidity it can also be understood as "relative humidity", referring to the quantity of humidity present in the wooden element in relation to its mass.

According to at least one version of the present invention, when we speak of humidity, we mean the humidity value present in the environment or room in which the wooden material is present during the respective step. According to a further version, possibly contextual to the one just indicated, the humidity values are understood as the percentage of humidity present inside the wooden material.

### Example

After the step of burning and/or carbonization with fire/open flame and extinguishing with cold water, as described above, according to at least one example of the present invention, the following steps take place in sequence:
- brushing in two steps with nylon brushes at 5 mtl/minute,
- acclimatization:
   - first acclimatization step for 72 hours at 22°C (humidity 45/50%)
   - second acclimatization step for 96 hours at 18°C (humidity 35%)
   - final brushing step.

### Consolidating step:

A) 1st step with water-based consolidating impregnating agent with acrylic resins, possibly modified, in flow coating for 180 micron/m² at 20°C (humidity 45/50%)
B) 1st step of consolidating drying for 4 hours at 20°C (humidity 45/50%)
C) 2nd step with water-based consolidating impregnating agent with acrylic resins, possibly modified, in flow coating for 180 micron/m² at 20°C (humidity 45/50%)
D) 2nd step of consolidating drying for 4 hours at 20°C (humidity 45/50%)
E) Final consolidating drying step 24 hours at 30°C with 45/50% humidity
F) Final control brushing to be carried out in the same conditions as the previous brushing step.

### Preparatory step based on thix impregnating agent

Preparatory step of water-based thix with acrylic resins, possibly modified, with Thix impregnating agent in two steps with the quantity of 180 micron/m² in a single coat, keeping the work area at 20°C. Once this preparatory step in "flow coating" has been completed, the material undergoes an initial drying of the impregnating agent at 20°C for 80 minutes and relative humidity at 45/50%.

After the first drying, the second preparatory step is repeated again with the quantity of 180 microns/m² in a second coat in the work area at 25°C.

Once this second step has been completed, the material undergoes a second drying at 30°C for 6 hours and relative humidity at 50%.

Final brushing for the preparatory step to be carried out in the same conditions as the previous brushing step.

### Finishing step (or third step)

Once the previous steps have been carried out, the finishing step begins with water-based acrylic resins, possibly modified, if desired hybrid, colourless related to the production of the model known commercially with the name "Ardes dry black 330" applied at 20°C at 45/50% of humidity in flow coating and left to dry for 24 hours under the same conditions of the treatment.

### Third step for coloured variants

A) The colouring finish for colour variants other than black is carried out after a drying step lasting 24 hours at 20°C with humidity of 50% starting from the end of the previous step using at least one of the following colouring pigments:
   Titanium colour pigment for white
   Gold powder dye pigment with metallic powder based for gold
   Natural iron metal powder based colouring pigment for platinum
   Blue-green-red-aviation organic colouring pigments for the colour variants

Ferrous metal pigments in oxidative reaction for Corten with acid reagents with contact duration for 24 hours in the first coat at 20°C with 55 microns/m² and second coat at 20°C with 45 microns/m2 and corrosion inhibitor.

Ferrous metal pigments with a paint base for Bronze/Lead/Copper/Brass for the metallescent colours, "metal" colours also possibly in the magnetic versions.

Once the previous pigmentation treatment has been carried out, drying is carried out for 96 hours at 30°C with 50% humidity followed by the final consolidating finish in flow coating using water-based acrylic resins, possibly modified if desired hybrid, and subsequent last final drying step always of 96 hours 30°C with 50% humidity.

Characteristics described for an embodiment or variant may also be present in other embodiments or variants, without thereby departing from the scope of protection determined by the attached claims.

The present invention is susceptible of numerous modifications and variations within the scope of the protection of the following claims.

## Claims

1. Method for the treatment of a wooden material, for the realization of a wall or a covering of a wall, a panel or a slab that cannot be walked on, a door, a false ceiling, including the following steps:
provide a wooden material, such as for example a larch wood or Larix decidua or another wood belonging to the Pinaceae family, cedar and/or western red cedar or Thuja plicata or another wood belonging to the Cupressaceae family, cedar of Lebanon or Cedrus Libani or oak or Quercus petraea or Quercus robur or another wood belonging to the Fagaceae family, or molecularly modified Radiata Pine wood, marketed under the name "Accoya" or Hdf (or High density Fiberboard) made on molecularly modified wood fiber marketed under the name "Tricoya", or Pinus radiata, pine or spruce or any other wood suitable for the purpose, in the form of boards, panels, laminated panels, planks, bars, beams, wherein said wooden material comprises at least one external surface to be treated,
drying said wooden material, for example bringing said wooden material to a percentage of humidity between 3% and 20%, obtaining a dried wooden material,
thermally treating said dried wooden material at at least said at least one external surface to be treated, wherein said thermally treating step comprises directly subjecting said at least one external surface to be treated to a fire or flame, subjecting said at least one external surface to be treated at a temperature of about 400°C-500°C or at least higher than 400°C or higher than 500°C or higher than 600°C or between 400°C and 800°C, for a given time less than 30 minutes, obtaining at least one burnt and/or carbonized treated surface,
apply cold water, for example at a temperature between 5°C and 15°C, on said at least one treated surface, so as to cool said at least one treated surface and extinguish any flames present on said at least one burnt and/or carbonized treated surface, in order to obtain at least one workable surface,
brushing said at least one workable surface, so as to eliminate an excess carbonization and/or residues and/or parts not sufficiently adhering to said at least one workable surface, obtaining at least one brushed surface, wherein said brushing step can be performed one, two or more times,
wherein said method comprises a consolidating step of at least said brushed surface maintaining at least said brushed surface at a temperature of 20°C, at a humidity of between 45% and 50%, wherein said consolidating step comprises applying at least one water-based impregnating agent, wherein said at least one water-based impregnating agent is based on or comprises acrylic resins followed by a drying step which takes place at 20°C at a humidity of between 45% and 50% for 4 hours, wherein said consolidating step, comprising said step of applying at least one water-based impregnating agent and said drying step, can be repeated once, twice or more times, obtaining at least a consolidated workable surface,
followed by at least one step of applying a water-based thix impregnating agent with acrylic resins of the thixotropic type, at a temperature of 20°C, drying said thix impregnating agent,
followed by a finishing step with the application of at least one water-based acrylic resin at a temperature of 20°C and a humidity of between 45% and 50%, wherein at least one of said step of applying at least one water-based impregnating agent, said at least one step of applying a thix impregnating agent and said step of applying at least one water-based acrylic resin takes place by application by means of at least one nozzle and/or by spray and/or by means of a "flow coating" technique.

2. Method according to claim 1, wherein such thermally treating step is carried out by placing said wooden material in an oven wherein there is said fire and/or said flame with which said wooden material comes into contact or by applying on said at least one external surface to be treated a flame of a torch, and/or wherein said step of thermally treating comprises carrying out a total burning of said at least one surface to be treated.

3. Method according to claim 1 or 2, wherein said given time varies from 6 minutes to 20 minutes.

4. Method according to any one of the preceding claims, wherein said consolidating step, comprising said step of applying at least one water-based impregnating agent and said drying step, occurs twice and is followed by a drying step for 24 hours at 30°C with a humidity of between 45% and 50%, obtaining at least one dried consolidated workable surface, and by a brushing step of said at least one dried consolidated workable surface.

5. Method according to any one of the preceding claims, wherein all the steps subsequent to said step of applying cold water take place at a temperature lower than about 32°C or lower than or equal to about 25°C.

6. Method according to any one of the preceding claims, wherein said at least one step of applying a thix impregnant comprises at least a first step of applying said thix impregnant, followed by said step of drying at 20°C for 80 minutes and a humidity included between 45% and 50%, and a second step of application of said thix impregnating agent at a temperature of 25°C, followed by a second step of drying at 30°C for 6 hours with a humidity of 50%, followed by a step of brushing said surface on which said dried thix impregnating agent is applied.

7. Method according to any one of the preceding claims, wherein at least one acclimatization step of said brushed surface takes place before said consolidating step, wherein said at least one acclimatization step comprises a first sub-step wherein said wooden material is maintained for 72 hours at 22°C with a humidity between 45% and 50%, a second sub-step wherein said wooden material is kept for 96 hours at 18°C with a humidity of 35%.

8. Method according to any one of the preceding claims, wherein said at least one water-based acrylic resin is a transparent and/or colourless resin and/or wherein said at least one acrylic resin is modified.

9. Method according to any one of the preceding claims, wherein said at least one water-based acrylic resin is hybrid.

10. Method according to any one of the preceding claims, wherein after said step of applying at least one acrylic resin, a final step of drying for 24 hours at 20°C takes place at a humidity of between 45% and 50%, wherein said final drying step can be performed once or twice.

11. Method according to claim 10, wherein after said drying step an application step of at least one colour and/or at least one coloured pigment takes place, wherein said at least one coloured pigment comprises at least one of: a titanium colouring pigment for the white colour, a gold powder colouring pigment based on metal powder for the gold or golden colour, a colouring pigment based on natural iron metal powder for the platinum colour, at least one blue-green-red-avio organic colouring pigment respectively for the blue-green-red-avio colour variants, at least one ferrous metal pigment in oxidative reaction for the Corten colour with acid reagents with a contact duration of 24 hours in the first coat at 20°C, for example with an application equal to 55 microns/m² and a second coat at 20°C with an application equal to 45 micron/m² and a corrosion inhibitor, at least one ferrous metal pigment on a varnish base for the bronze, lead, copper, brass colours respectively for the metallescent and/or magnetic colours, wherein after said application step of at least one colour and/or at least one coloured pigment a drying step takes place for 96 hours 30°C with 50% humidity.

12. Method according to claim 11, wherein said application step of at least one colour and/or at least one coloured pigment takes place by applying said at least one colour and/or said at least one coloured pigment and/or at least one water-based acrylic resin comprising said at least one coloured pigment.

13. Method according to claim 11, wherein said drying step is repeated and wherein said repeated drying step is preceded by a final application step of said at least one water-based acrylic resin, by application by means of at least one nozzle and/or by spray and/or by means of the "flow coating" technique.

14. Method according to any one of the preceding claims, wherein said brushing step takes place with a brush, at a feed rate of 5 mtl/minute, so as to remove any fragile external layers of the consolidated workable surface and not perfectly adhered to said wooden material, obtaining a further brushed surface and in such a way as to compact and eliminate any irregularities present on the wooden material and/or on the dried surface.

15. Method according to claim 14, wherein said brush is a rotary brush, or a brush with nylon bristles.

## Patentansprüche

1. Verfahren zur Behandlung eines Holzwerkstoffes, zur Herstellung einer Wand oder einer Verkleidung einer Wand, eines Paneels oder einer Platte, die nicht begehbar ist, einer Tür, einer Zwischendecke, das die folgenden Schritte beinhaltet:
Bereitstellen eines Holzmaterials, wie zum Beispiel Lärchenholz oder Larix decidua oder ein anderes Holz aus der Familie der Pinaceae, Zeder und/oder westliche rote Zeder oder Thuja plicata oder ein anderes Holz aus der Familie der Cupressaceae, Libanonzeder oder Cedrus Libani oder Eiche oder Quercus petraea oder Quercus robur oder ein anderes Holz aus der Familie der Fagaceae oder molekular modifiziertes Radiata-Kiefernholz, vermarktet unter der Bezeichnung "Accoya" oder Hdf (oder Hochdichte Faserplatte) aus molekular modifizierten Holzfasern vermarktet unter der Bezeichnung "Tricoya", oder Pinus radiata, Kiefer oder Fichte oder jedes andere für diesen Zweck geeignete Holz, in Form von Brettern, Paneelen, Laminatpaneelen, Bohlen, Stäben, Balken, worin das besagte Holzmaterial mindestens eine zu behandelnde äußere Oberfläche umfasst,
Trocknen des besagten Holzmaterials, zum Beispiel Bringen auf einen Prozentsatz der Feuchtigkeit zwischen 3 % und 20 %, wodurch ein getrocknetes Holzmaterial erhalten wird,
thermisches Behandeln des getrockneten Holzmaterials an mindestens der besagten mindestens einen zu behandelnden äußeren Oberfläche, worin der besagte Schritt des thermischen Behandelns das direkte Aussetzen der besagten mindestens einen zu behandelnden äußeren Oberfläche einem Feuer oder einer Flamme umfasst, wobei die besagte mindestens eine zu behandelnde äußere Oberfläche einer Temperatur von etwa 400 °C - 500 °C oder mindestens höher als 400 °C oder höher als 500 °C oder höher als 600 °C oder zwischen 400 °C und 800 °C, für eine vorgegebene Zeit von weniger als 30 Minuten, ausgesetzt wird, wodurch mindestens eine verbrannte und/oder karbonisierte behandelte Oberfläche erhalten wird,
Aufbringen von kaltem Wasser, zum Beispiel mit einer Temperatur zwischen 5 °C und 15 °C, auf die besagte mindestens eine behandelte Oberfläche, um die besagte mindestens eine behandelte Oberfläche abzukühlen und alle Flammen, die auf der besagten mindestens einen verbrannten und/oder karbonisierten behandelten Oberfläche vorhanden sind, zu löschen, um mindestens eine bearbeitbare Oberfläche zu erhalten,
Bürsten der besagten mindestens einen bearbeitbaren Oberfläche, um eine überschüssige Karbonisierung und/oder Rückstände und/oder Teile, die nicht ausreichend an der besagten mindestens einen bearbeitbaren Oberfläche haften, zu beseitigen, wodurch mindestens eine gebürstete Oberfläche erhalten wird, worin der besagten Bürstschritt ein-, zwei- oder mehrmals durchgeführt werden kann,
worin das besagte Verfahren einen Verfestigungsschritt von mindestens der besagten gebürsteten Oberfläche umfasst, wobei mindestens die besagte gebürstete Oberfläche bei einer Temperatur von 20 °C, bei einer Feuchtigkeit zwischen 45 % und 50 %, gehalten wird, worin der besagte Verfestigungsschritt das Aufbringen von mindestens einem wasserbasierten Imprägniermittel umfasst, worin das besagte mindestens eine wasserbasierte Imprägniermittel auf Acrylharzen basiert oder diese umfasst, gefolgt von einem Trocknungsschritt, der bei 20 °C bei einer Feuchtigkeit zwischen 45 % und 50 % für 4 Stunden erfolgt, worin der besagte Verfestigungsschritt, der den besagten Schritt des Aufbringens mindestens eines wasserbasierten Imprägniermittels und den besagten Trocknungsschritt umfasst, einmal, zweimal oder mehrmals wiederholt werden kann, wodurch mindestens eine verfestigte bearbeitbare Oberfläche erhalten wird,
gefolgt von mindestens einem Schritt des Aufbringens eines wasserbasierten Thix-Imprägniermittels mit Acrylharzen des thixotropen Typs, bei einer Temperatur von 20 °C, Trocknen des besagten Thix-Imprägniermittels, gefolgt von einem Endbearbeitungsschritt mit der Aufbringung von mindestens einem wasserbasierten Acrylharz bei einer Temperatur von 20 °C und einer Feuchtigkeit zwischen 45 % und 50 %, worin mindestens einer des besagten Schritts des Aufbringens mindestens eines wasserbasierten Imprägniermittels, des besagten mindestens einen Schritts des Aufbringens eines Thix-Imprägniermittels und des besagten Schritts des Aufbringens mindestens eines wasserbasierten Acrylharzes durch Aufbringung mittels mindestens einer Düse und/oder durch Sprühen und/oder mittels einer "Fließbeschichtung"-Technik erfolgt.

2. Verfahren nach Anspruch 1, worin ein solcher Schritt der thermischen Behandlung ausgeführt wird, indem das besagte Holzmaterial in einem Ofen angeordnet wird, worin sich das besagte Feuer und/oder die besagte Flamme befindet, mit dem/der das besagte Holzmaterial in Kontakt kommt, oder indem auf die besagte mindestens eine zu behandelnde äußere Oberfläche eine Flamme eines Brenners aufgebracht wird, und/oder worin der besagte Schritt der thermischen Behandlung die Ausführung einer vollständigen Verbrennung der besagten mindestens einen zu behandelnden Oberfläche umfasst.

3. Verfahren nach Anspruch 1 oder 2, worin die besagte vorgegebene Zeit zwischen 6 Minuten und 20 Minuten variiert.

4. Verfahren nach irgendeinem der vorangegangenen Ansprüche, worin der besagte Verfestigungsschritt, umfassend den besagten Schritt des Aufbringens mindestens eines wasserbasierten Imprägniermittels und den besagte Trocknungsschritt, zweimal erfolgt und der gefolgt ist von einem Trocknungsschritt für 24 Stunden bei 30 °C mit einer Feuchtigkeit zwischen 45 % und 50 %, wodurch mindestens eine getrocknete verfestigte bearbeitbare Oberfläche erhalten wird, und von einem Bürstschritt der besagten mindestens einen getrockneten verfestigten bearbeitbaren Oberfläche.

5. Verfahren nach irgendeinem der vorangegangenen Ansprüche, worin alle Schritte nach dem besagten Schritt des Aufbringens von kaltem Wasser bei einer Temperatur, die niedriger als etwa 32 °C oder niedriger als oder gleich etwa 25 °C ist, erfolgen.

6. Verfahren nach irgendeinem der vorangegangenen Ansprüche, worin der besagte mindestens eine Schritt des Aufbringens eines Thix-Imprägniermittels mindestens einen ersten Schritt des Aufbringens des besagten Thix-Imprägniermittels, gefolgt von dem besagten Schritt des Trocknens bei 20 °C für 80 Minuten und einer Feuchtigkeit zwischen 45 % und 50 %, und einen zweiten Schritt der Aufbringung des besagten Thix-Imprägniermittels bei einer Temperatur von 25 °C, gefolgt von einem zweiten Schritt des Trocknens bei 30 °C für 6 Stunden mit einer Feuchtigkeit von 50 %, gefolgt von einem Schritt des Bürstens der besagten Oberfläche, auf die das besagte getrocknete Thix-Imprägniermittel aufgebracht ist, umfasst.

7. Verfahren nach irgendeinem der vorangegangenen Ansprüche, worin mindestens ein Akklimatisierungsschritt der besagten gebürsteten Oberfläche vor dem besagten Verfestigungsschritt erfolgt, worin der besagte mindestens eine Akklimatisierungsschritt einen ersten Teilschritt, worin das besagte Holzmaterial für 72 Stunden bei 22 °C mit einer Feuchtigkeit zwischen 45 % und 50 % gehalten wird, und einen zweiten Teilschritt, worin das besagte Holzmaterial für 96 Stunden bei 18 °C mit einer Feuchtigkeit von 35 % gehalten wird, umfasst.

8. Verfahren nach irgendeinem der vorangegangenen Ansprüche, worin das besagte mindestens eine wasserbasierte Acrylharz ein transparentes und/oder farbloses Harz ist und/oder worin das besagte mindestens eine Acrylharz modifiziert ist.

9. Verfahren nach irgendeinem der vorangegangenen Ansprüche, worin das besagte mindestens eine wasserbasierte Acrylharz ein Hybrid ist.

10. Verfahren nach irgendeinem der vorangegangenen Ansprüche, worin nach dem besagten Schritt des Aufbringens mindestens eines Acrylharzes ein abschließender Schritt des Trocknens für 24 Stunden bei 20 °C bei einer Feuchtigkeit zwischen 45 % und 50 % erfolgt, worin der besagte abschließende Trocknungsschritt einmal oder zweimal durchgeführt werden kann.

11. Verfahren nach Anspruch 10, worin nach dem besagten Trocknungsschritt ein Aufbringungsschritt von mindestens einer Farbe und/oder mindestens einem Farbpigment erfolgt, worin das besagte mindestens eine Farbpigment mindestens eines umfasst von: einem Titan-Farbpigment für die weiße Farbe, einem Goldpulver-Farbpigment auf Basis von Metallpulver für die goldene oder goldfarbene Farbe, einem Farbpigment auf Basis von natürlichem Eisenmetallpulver für die Platinfarbe, mindestens einem blau-grün-rot-avio organischen Farbpigment jeweils für die blau-grün-rot-avio Farbvarianten, mindestens einem eisenhaltigen Metallpigment in oxidativer Reaktion für die Corten-Farbe mit Säurereagenzien mit einer Kontaktdauer von 24 Stunden in der ersten Beschichtung bei 20 °C, zum Beispiel mit einer Aufbringung von 55 Mikron/m² und einer zweiten Beschichtung bei 20 °C mit einer Aufbringung von 45 Mikron/m² und einem Korrosionsinhibitor, mindestens einem eisenhaltigen Metallpigment auf Lackbasis für die Bronze-, Blei-, Kupfer-, Messingfarben jeweils für die metallisch schimmernden und/oder magnetischen Farben, worin nach dem besagten Aufbringungsschritt mindestens einer Farbe und/oder mindestens eines Farbpigments ein Trocknungsschritt für 96 Stunden bei 30 °C mit 50 % Feuchtigkeit erfolgt.

12. Verfahren nach Anspruch 11, worin der besagte Aufbringungsschritt mindestens einer Farbe und/oder mindestens eines Farbpigments durch Aufbringen der besagten mindestens einen Farbe und/oder des besagten mindestens einen Farbpigments und/oder mindestens einen wasserbasierten Acrylharzes, umfassend das besagte mindestens eine Farbpigment, erfolgt.

13. Verfahren nach Anspruch 11, worin der besagte Trocknungsschritt wiederholt wird und worin dem wiederholten Trocknungsschritt ein abschließender Aufbringungsschritt des besagten mindestens einen wasserbasierten Acrylharzes durch Aufbringung mittels mindestens einer Düse und/oder durch Sprühen und/oder mittels der "Fließbeschichtung"-Technik vorausgeht.

14. Verfahren nach irgendeinem der vorangegangenen Ansprüche, worin der besagte Bürstschritt mit einer Bürste bei einer Vorschubgeschwindigkeit von 5 lfm/Minute erfolgt, um alle fragilen und nicht perfekt an dem besagten Holzmaterial haftenden äußeren Schichten der verfestigten bearbeitbaren Oberfläche zu entfernen, wodurch eine weitere gebürstete Oberfläche erhalten wird und in einer solchen Weise, dass alle auf dem Holzmaterial und/oder der getrockneten Oberfläche vorhandenen Unregelmäßigkeiten verdichtet und beseitigt werden.

15. Verfahren nach Anspruch 14, worin die besagte Bürste eine Rotationsbürste oder eine Bürste mit Nylonborsten ist.

## Revendications

1. Procédé de traitement d'un matériau en bois, pour la réalisation d'un mur ou d'un revêtement d'un mur, d'un panneau ou d'une dalle sur lesquels on ne peut pas marcher, d'une porte, d'un faux plafond, comprenant les étapes suivantes :
fourniture d'un matériau en bois, comme par exemple un bois de mélèze ou Larix decidua ou un autre bois appartenant à la famille des pinacées, de cèdre et/ou de cèdre rouge de l'Ouest ou Thuja plicata ou un autre bois appartenant à la famille des cupressacées, de cèdre du Liban ou Cedrus Libani ou de chêne ou Quercus petraea ou Quercus robur ou un autre bois appartenant à la famille des fagacées, ou bois de pin radiata moléculairement modifié, commercialisé sous la dénomination « Accoya » ou HDF (ou panneau de fibres à haute densité) fabriqué sur fibre de bois moléculairement modifiée commercialisée sous la dénomination « Tricoya », ou Pinus radiata, pin ou épicéa ou tout autre bois adapté à cet effet, sous forme de plaques, panneaux, panneaux stratifiés, planches, barres, poutres, dans lesquels ledit matériau en bois comporte au moins une surface extérieure à traiter,
séchage dudit matériau en bois, par exemple en portant ledit matériau en bois à un pourcentage d'humidité compris entre 3% et 20%, obtenant un matériau en bois séché,
traitement thermique dudit matériau en bois séché sur au moins ladite au moins une surface extérieure à traiter, dans lequel ladite étape de traitement thermique consiste à soumettre directement ladite au moins une surface extérieure à traiter au feu ou à une flamme, soumettant ladite au moins une surface extérieure à traiter à une température d'environ 400°C à 500°C ou au moins supérieure à 400°C ou supérieure à 500°C ou supérieure à 600°C ou entre 400°C et 800°C, pendant un temps donné inférieur à 30 minutes, obtenant au moins une surface traitée brûlée et/ou carbonisée,
application d'eau froide, par exemple à une température comprise entre 5°C et 15°C, sur ladite au moins une surface traitée, de manière à refroidir ladite au moins une surface traitée et à éteindre des flammes présentes sur ladite au moins une surface traitée brûlée et/ou carbonisée, afin d'obtenir au moins une surface à travailler,
brossage de ladite au moins une surface à travailler, de manière à éliminer un excès de carbonisation et/ou des résidus et/ou des parties n'adhérant pas suffisamment à ladite au moins une surface à travailler, obtenant au moins une surface brossée, dans laquelle ladite étape de brossage peut être effectuée une, deux ou plusieurs fois, dans lequel ledit procédé comprend une étape de consolidation d'au moins ladite surface brossée maintenant au moins ladite surface brossée à une température de 20°C, à une humidité comprise entre 45% et 50%, dans lequel ladite étape de consolidation comprend l'application d'au moins un agent d'imprégnation à base d'eau, dans lequel ledit au moins un agent d'imprégnation à base d'eau est à base de ou comprises résines acryliques, suivie d'une étape de séchage qui a lieu à 20°C à une humidité entre 45% et 50% pendant 4 heures, dans lequel ladite étape de consolidation, comprenant ladite étape d'application d'au moins un agent d'imprégnation à base d'eau et ladite étape de séchage, peut être répétée une fois, deux ou plusieurs fois, obtenant au moins une surface consolidée et à travailler, suivi d'au moins une étape d'application d'un agent d'imprégnation thix à base d'eau avec des résines acryliques de type thixotrope, à une température de 20°C, séchant ledit agent d'imprégnation thix,
suivi d'une étape de finition avec l'application d'au moins une résine acrylique à base d'eau à une température de 20°C et une humidité comprise entre 45% et 50%, dans lequel au moins une de ladite étape d'application d'au moins un agent d'imprégnation à base d'eau, ladite au moins une étape d'application d'un agent d'imprégnation thix et ladite étape d'application d'au moins une résine acrylique à base d'eau a lieu par application au moyen d'au moins une buse et/ou par pulvérisation et/ou au moyen d'une technique de « revêtement par aspersion ».

2. Procédé selon la revendication 1, dans lequel une telle étape de traitement thermique est effectuée en plaçant ledit matériau en bois dans un four dans lequel se trouve ledit feu et/ou ladite flamme avec laquelle ledit matériau en bois entre en contact ou en appliquant sur ladite au moins une surface extérieure à traiter au moins une flamme d'un chalumeau, et/ou dans laquelle ladite étape de traitement thermique consiste à effectuer une combustion totale de ladite au moins une surface à traiter.

3. Procédé selon la revendication 1 ou 2, dans lequel ledit temps donné varie de 6 minutes à 20 minutes.

4. Procédé selon l'une quelconque des revendications précédentes, dans lequel ladite étape de consolidation, comprenant ladite étape d'application d'au moins un agent d'imprégnation à base d'eau et ladite étape de séchage, se produit deux fois et est suivie d'une étape de séchage pendant 24 heures à 30°C avec une humidité comprise entre 45% et 50%, obtenant au moins une surface consolidée sèche pouvant être travaillée, et d'une étape de brossage de ladite au moins une surface consolidée séchée et à travailler.

5. Procédé selon l'une quelconque des revendications précédentes, dans lequel toutes les étapes postérieures à ladite étape d'application d'eau froide ont lieu à une température inférieure à environ 32°C ou inférieure ou égale à environ 25°C.

6. Procédé selon l'une quelconque des revendications précédentes, dans lequel ladite étape d'application d'un agent d'imprégnation comprend au moins une première étape d'application dudit imprégnant thix, suivie de ladite étape de séchage à 20°C pendant 80 minutes et d'une humidité comprise entre 45% et 50%, et d'une deuxième étape d'application dudit agent d'imprégnation thix à une température de 25°C, suivie d'une deuxième étape de séchage à 30°C pendant 6 heures avec une humidité de 50%, suivie d'une étape de brossage de ladite surface sur laquelle ledit agent d'imprégnation séché est appliqué.

7. Procédé selon l'une quelconque des revendications précédentes, dans lequel au moins une étape d'acclimatation de ladite surface brossée a lieu avant ladite étape de consolidation, dans laquelle ladite étape d'acclimatation comprend une première sous-étape dans laquelle ledit matériau en bois est maintenu pendant 72 heures à 22°C avec une humidité comprise entre 45% et 50%, une deuxième sous-étape dans laquelle ledit matériau en bois est conservé pendant 96 heures à 18°C avec une humidité de 35%.

8. Procédé selon l'une quelconque des revendications précédentes, dans lequel ladite au moins une résine acrylique à base d'eau est une résine transparente et/ou incolore et/ou dans laquelle ladite moins une résine acrylique est modifiée.

9. Procédé selon l'une quelconque des revendications précédentes, dans lequel au moins une résine acrylique à base d'eau est hybride.

10. Procédé selon l'une quelconque des revendications précédentes, dans lequel, après ladite étape d'application d'au moins une résine acrylique, une étape finale de séchage pendant 24 heures à 20°C a lieu à une humidité comprise entre 45% et 5 %, dans laquelle ladite étape finale de séchage peut être effectuée une ou deux fois.

11. Procédé selon la revendication 10, dans lequel, après ladite étape de séchage, une étape d'application d'au moins une couleur et/ou d'au moins un pigment coloré a lieu, dans laquelle ledit moins un pigment coloré comprend au moins un des éléments suivants: un pigment colorant en titane pour la couleur blanche, un pigment colorant en poudre d'or à base de poudre métallique pour la couleur or ou dorée, un pigment colorant à base de poudre de fer métallique naturel pour la couleur platine, au moins un pigment colorant organique bleu-vert-rouge-avio respectivement pour les variantes de couleur bleu-vert-rouge-avio, au moins un pigment de métal ferreux en réaction oxydative pour la couleur Corten avec des réactifs acides d'une durée de contact de 24 heures dans la première couche à 20°C, par exemple avec une application égale à 55 microns/m² et une seconde couche à 20°C avec une application égale à 45 microns/m² et un inhibiteur de corrosion, au moins un pigment de métal ferreux sur une base de vernis pour les couleurs bronze, plomb, cuivre, laiton respectivement pour les couleurs métallisées et/ou magnétiques, dans lequel après ladite étape d'application d'au moins une couleur et/ou d'au moins un pigment coloré une étape de séchage a lieu pendant 96 heures à 30°C avec 50% d'humidité.

12. Procédé selon la revendication 11, dans lequel ladite étape d'application d'au moins une couleur et/ou d'au moins un pigment coloré a lieu par l'application d'au moins une couleur et/ou d'au moins un pigment coloré et/ou d'au moins une résine acrylique à base d'eau comprenant ledit au moins un pigment coloré.

13. Procédé selon la revendication 11, dans lequel ladite étape de séchage est répétée et dans laquelle ladite étape de séchage répétée est précédée d'une étape finale d'application de ladite au moins une résine acrylique à base d'eau, par application au moyen d'au moins une buse et/ou par pulvérisation et/ou au moyen de la technique du « revêtement par aspersion ».

14. Procédé selon l'une quelconque des revendications précédentes, dans lequel ladite étape de brossage s'effectue à l'aide d'une brosse, à une vitesse d'avance de 5 mtl/minute, de manière à éliminer les couches externes fragiles de la surface consolidée à travailler et qui n'adhèrent pas parfaitement à ledit matériau en bois, en obtenant une surface brossée supplémentaire et de manière à compacter et à éliminer les irrégularités présentes sur le matériau en bois et/ou sur la surface séchée.

15. Procédé selon la revendication 14, dans lequel ladite brosse est une brosse rotative ou une brosse à poils en nylon.
